# EUROPEAN PATENT SPECIFICATION

(11) **EP 2 703 056 B1**
(45) Date of publication and mention of the grant of the patent: **02.11.2016**
(21) Application number: 13182886.5
(22) Date of filing: 03.09.2013
(51) Int. Cl.: B01D 35/153, B01D 35/16, B01D 29/21, B01D 29/96

(54) **Filter**
Filter
Filtre

(30) Priority: 04.09.2012 US 201261696353 P
(43) Date of publication of application: 05.03.2014
(73) Proprietor: A.L. Filter Co., Ltd., 7752862 Ashdod (IL)
(72) Inventor: RADEVA-TSANOVA, Rozita, 7012 Ruse (BG); LEVY, Itsik, 5949626 Bat Yam (IL); BEN-SHIMON, Yaakov, 7647206 Rehovot (IL)
(74) Representative: Taor, Simon Edward William

(56) References cited:
- FR-A1- 2 970 421

## Description

The present invention seeks to provide novel fluid filters which are suitable for various existing fluid filter housing configurations.

FR2970421 discloses a filter having a housing base with a complementary passage for receiving an insertion pawl to align a filter cartridge about a central axis into a predesignated rotational position with respect to a filter housing.

There is thus provided in accordance with a preferred embodiment of the present invention an adaptable fluid filter including a fluid filter body and first and second selectably removable insertion guide elements, which guide the fluid filter body along an inner side surface of a filter housing as it is inserted into the filter housing, a selectable one of said first and second selectably removable insertion guide elements being detachable from said filter body so as to adapt the fluid filter for insertion into a corresponding selectable fluid filter housing.

Preferably, the adaptable fluid filter also includes an aperture plug protrusion mounted on the fluid filter body, the first and second selectably removable insertion guide elements being separate from the aperture plug protrusion.

In accordance with a preferred embodiment of the present invention the fluid filter body includes a generally flat end portion formed with a generally circular circumferential edge including at least one edge protrusion. Additionally, at least one of the at least one edge protrusion includes a generally inclined edge portion, a generally radially extending edge portion and a generally circumferential edge portion extending between the generally inclined edge portion and the generally radially extending edge portion.

Preferably, the generally flat end portion includes at least two insertion guide element receiving protrusions. Additionally, each of the at least two insertion guide element receiving protrusions define a circumferential slot. Preferably, the insertion guide element is mounted in the circumferential slot defined by the at least two insertion guide element receiving protrusions.

The present invention will be understood and appreciated more fully from the following detailed description in which:
Figs. 1A and 1B are simplified pictorial illustrations of one embodiment of a filter element constructed and operative in accordance with a preferred embodiment of the present invention;
Figs. 2A and 2B are simplified pictorial illustrations of another embodiment of a filter element constructed and operative in accordance with a preferred embodiment of the present invention;
Figs. 3A and 3B are simplified pictorial illustrations of yet another embodiment of a filter element constructed and operative in accordance with a preferred embodiment of the present invention;
Figs. 4A and 4B are simplified pictorial illustrations of first and second different adaptations of the embodiment of Figs. 3A & 3B;
Figs. 5A, 5B and 5C are simplified pictorial illustrations of still another embodiment of a filter element constructed and operative in accordance with a preferred embodiment of the present invention; and
Figs. 6A, 6B and 6C are simplified pictorial illustrations of a still further embodiment of a filter element constructed and operative in accordance with a preferred embodiment of the present invention.

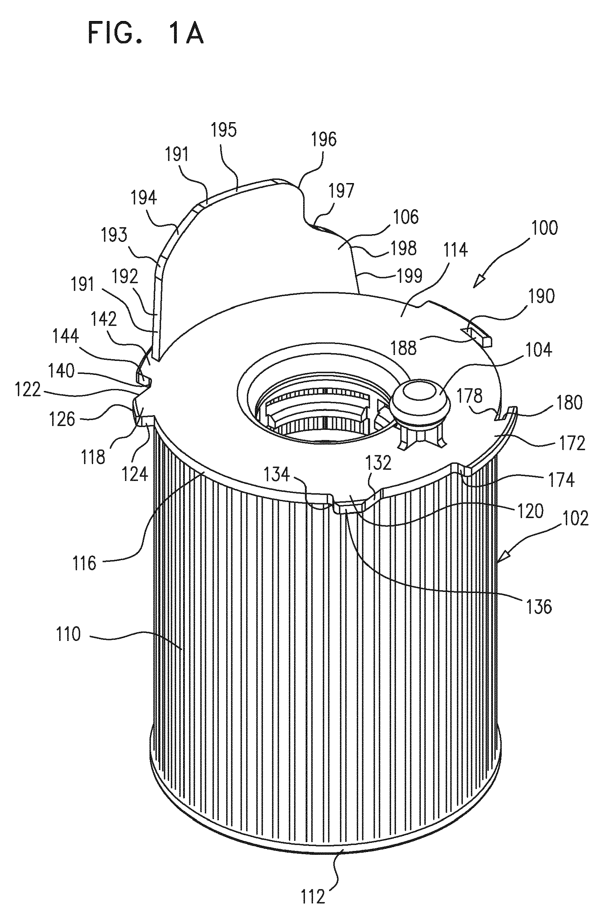

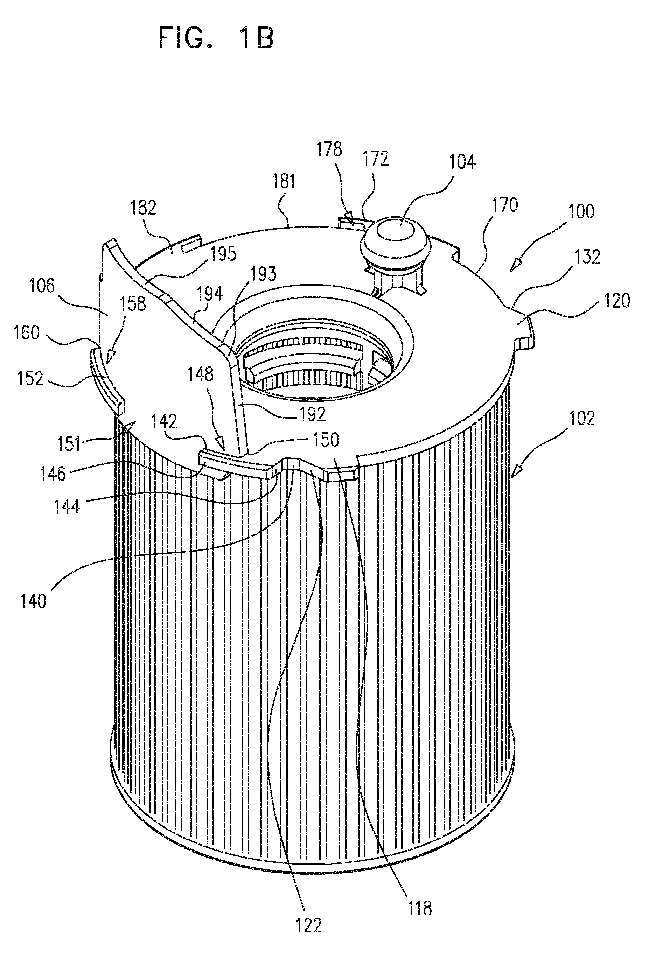

Reference is now made to Figs. 1A and 1B, which are simplified pictorial illustrations of one embodiment of a filter element constructed and operative in accordance with a preferred embodiment of the present invention. As seen in Figs. 1A and 1B, there is provided a fluid filter 100 including a fluid filter body 102 and an aperture plug protrusion 104 mounted on the fluid filter body 102. In accordance with a preferred embodiment of the present invention there is additionally provided an insertion guide element 106, separate from the aperture plug protrusion 104, which is operative to guide the fluid filter body 102 along an inner side surface of a filter housing (not shown) as it is inserted into the filter housing.

As seen in Figs. 1A and 1B, the fluid filter body 102 includes a conventional generally cylindrical filter element portion 110 and first and second generally flat end portions 112 and 114. Aperture plug protrusion 104 extends outwardly from end portion 114.

End portion 114 is preferably formed with a generally circular circumferential edge 116 including first and second mutually spaced edge protrusions 118 and 120. First edge protrusion 118 preferably includes a generally inclined edge portion 122, a generally radially extending edge portion 124 and a generally circumferential edge portion 126 extending therebetween. Second edge protrusion 120 preferably includes a generally inclined edge portion 132, a generally radially extending edge portion 134 and a generally circumferential edge portion 136 extending therebetween.

Adjacent first end protrusion 118 and spaced from inclined surface 122 thereof by a relatively short first circumferential distance 140 is a first insertion guide element receiving protrusion 142, preferably having an inclined surface 144 facing inclined surface 122 of protrusion 118, and an outer circumferential surface 146 and defining a circumferential slot 148 having a circumferentially directed opening 150 facing in a circumferential direction opposite to surface 144.

Adjacent first insertion guide element receiving protrusion 142 and spaced from opening 150 thereof by a circumferential distance 151 is a second insertion guide element receiving protrusion 152, defining a circumferential slot 158 having a circumferentially directed opening 160 facing in a circumferential direction opposite to opening 150.

Adjacent second end protrusion 120 and spaced from inclined surface 132 thereof by a relatively long second circumferential distance 170 is a third insertion guide element receiving protrusion 172, preferably having an inclined surface 174 facing inclined surface 132 of protrusion 120, and an outer circumferential surface 176 and defining a circumferential slot 178 having a circumferentially directed opening 180 facing in a circumferential direction opposite to surface 174.

Adjacent third insertion guide element receiving protrusion 172 and spaced from opening 180 thereof by a circumferential distance 181 is a fourth insertion guide element receiving protrusion 182, defining a circumferential slot 188 having a circumferentially directed opening 190 facing in a circumferential direction opposite to opening 180.

In the illustrated embodiment of Figs. 1A and 1B, the insertion guide element 106 is mounted into respective slots 148 and 158 of respective first and second insertion guide element receiving protrusions 142 and 152. The insertion guide element is preferably a generally curved upstanding element having a peripheral guide edge surface , including a generally upstanding portion 192, a first corner portion 193, an inclined portion 194, a generally circumferential portion 195, a second corner portion 196, a concave portion 197, a third corner portion 198 and a generally upstanding portion 199.

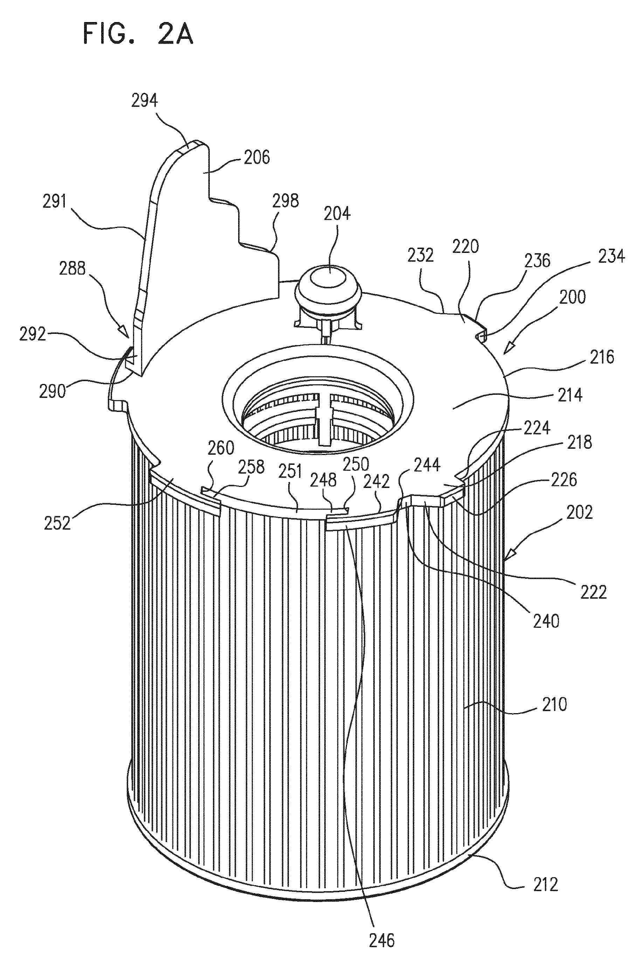

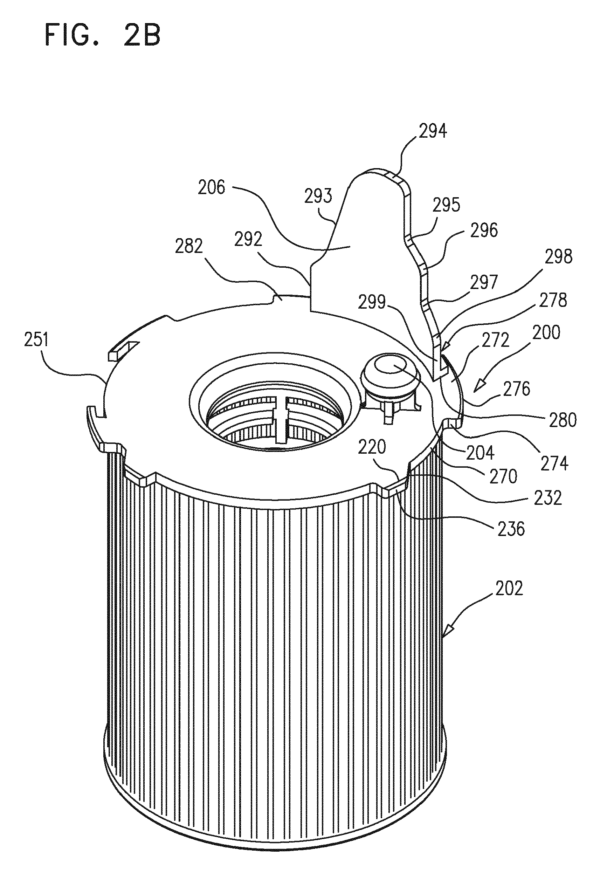

Reference is now made to Figs. 2A and 2B, which are simplified pictorial illustrations of another embodiment of a filter element constructed and operative in accordance with a preferred embodiment of the present invention. As seen in Figs. 2A and 2B, there is provided a fluid filter 200 including a fluid filter body 202 and an aperture plug protrusion 204 mounted on the fluid filter body 202. In accordance with a preferred embodiment of the present invention there is additionally provided an insertion guide element 206, separate from the aperture plug protrusion 204, which is operative to guide the fluid filter body along an inner side surface of a filter housing (not shown) as it is inserted into the filter housing. The different between the embodiments of Figs. 1A & 1B and 2A & 2B is in the configuration and circumferential location of the insertion guide element 206, wherein different configurations of the insertion guide element 206 are adapted for use with different filter housings.

As seen in Figs. 2A and 2B, the fluid filter body 202 includes a conventional generally cylindrical filter element portion 210 and first and second generally flat end portions 212 and 214. Aperture plug protrusion 204 extends outwardly from end portion 214.

End portion 214 is preferably formed with a generally circular circumferential edge 216 including first and second mutually spaced edge protrusions 218 and 220. First edge protrusion 218 preferably includes a generally inclined edge portion 222, a generally radially extending edge portion 224 and a generally circumferential edge portion 226 extending therebetween. Second edge protrusion 220 preferably includes a generally inclined edge portion 232, a generally radially extending edge portion 234 and a generally circumferential edge portion 236 extending therebetween.

Adjacent first end protrusion 218 and spaced from inclined surface 222 thereof by a relatively short first circumferential distance 240 is a first insertion guide element receiving protrusion 242, preferably having an inclined surface 244 facing inclined surface 222 of protrusion 218, and an outer circumferential surface 246 and defining a circumferential slot 248 having a circumferentially directed opening 250 facing in a circumferential direction opposite to surface 244.

Adjacent first insertion guide element receiving protrusion 242 and spaced from opening 250 thereof by a circumferential distance 252 is a second insertion guide element receiving protrusion 252, defining a circumferential slot 258 having a circumferentially directed opening 260 facing in a circumferential direction opposite to opening 250.

Adjacent second end protrusion 220 and spaced from inclined surface 232 thereof by a relatively long second circumferential distance 270 is a third insertion guide element receiving protrusion 272, preferably having an inclined surface 274 facing inclined surface 232 of protrusion 220, and an outer circumferential surface 276 and defining a circumferential slot 278 having a circumferentially directed opening 280 facing in a circumferential direction opposite to surface 274.

Adjacent third insertion guide element receiving protrusion 272 and spaced from opening 280 thereof by a circumferential distance 282 is a fourth insertion guide element receiving protrusion 282, defining a circumferential slot 288 having a circumferentially directed opening 290 facing in a circumferential direction opposite to opening 280.

In the illustrated embodiment of Figs. 2A and 2B, the insertion guide element 206 is mounted into respective slots 278 and 278 of respective second and third insertion guide element receiving protrusions 272 and 282. The insertion guide element is preferably a generally curved upstanding element having a peripheral guide edge surface 291, including a generally upstanding portion 292, a first concave portion 293, a rounded top portion 294, a second concave portion 295, a first shoulder portion 296, a third concave portion 297, a second shoulder portion 298, and generally upstanding portion 299.

It is appreciated that in the embodiments of Figs. 1A - 2B, the insertion guide elements may be integrally formed with an end portion or mounted thereon in any other suitable manner.

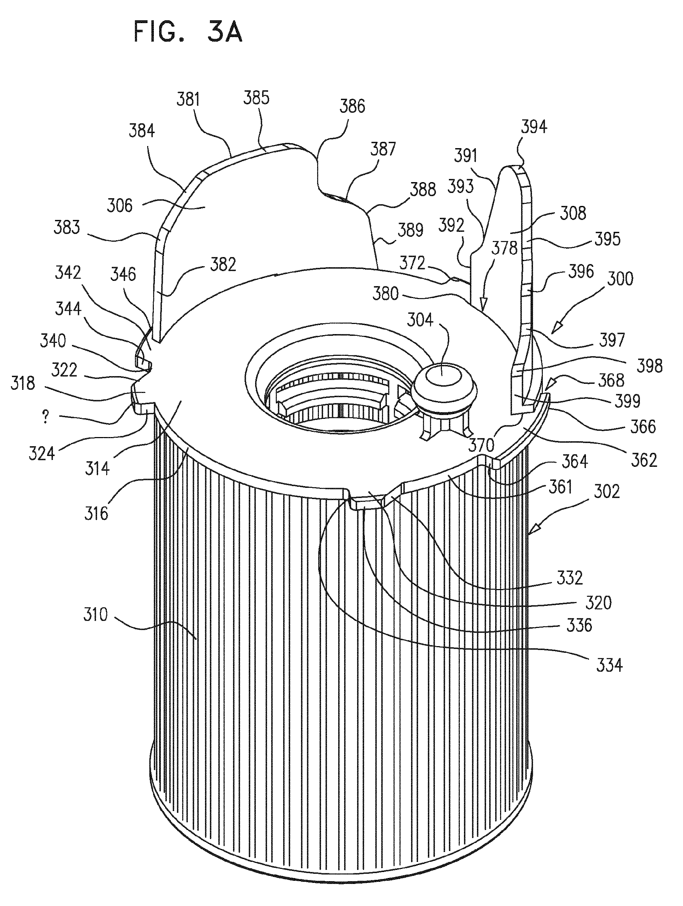

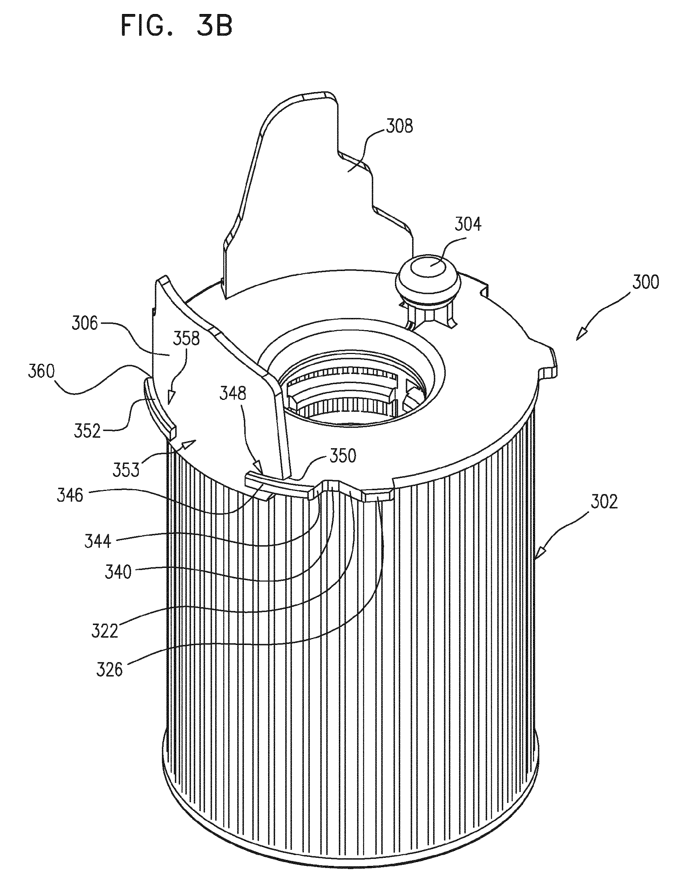

Reference is now made to Figs. 3A and 3B, which are simplified pictorial illustrations of yet another embodiment of a filter element constructed and operative in accordance with a preferred embodiment of the present invention. As seen in Figs. 3A and 3B, there is provided a fluid filter 300 including a fluid filter body 302 and an aperture plug protrusion 304 mounted on the fluid filter body 302. In accordance with a preferred embodiment of the present invention there are additionally provided first and second insertion guide elements 306 and 308, separate from the aperture plug protrusion 304.

The embodiment of Figs. 3A & 3B is adaptable to different configurations of fluid filter housing by removing a selectable one of the first and second insertion guide elements 306 and 308. The remaining one of the first and second insertion guide elements 306 and 308 is operative to guide the fluid filter body along an inner side surface of a corresponding filter housing (not shown) as it is inserted into the filter housing, wherein different ones of the insertion guide elements 306 and 308 are adapted for use with different filter housings.

As seen in Figs. 3A and 3B, the fluid filter body 302 includes a conventional generally cylindrical filter element portion 310 and first and second generally flat end portions 312 and 314. Aperture plug protrusion 304 extends outwardly from end portion 314. End portion 314 is preferably formed with a generally circular circumferential edge 316 including first and second mutually spaced edge protrusions 318 and 320. First edge protrusion 318 preferably includes a generally inclined edge portion 322, a generally radially extending edge portion 324 and a generally circumferential edge portion 326 extending therebetween. Second edge protrusion 320 preferably includes a generally inclined edge portion 332, a generally radially extending edge portion 334 and a generally circumferential edge portion 336 extending therebetween.

Adjacent first end protrusion 318 and spaced from inclined surface 322 thereof by a relatively short first circumferential distance 340 is a first insertion guide element receiving protrusion 342, preferably having an inclined surface 344 facing inclined surface 322 of protrusion 318, and an outer circumferential surface 346 and defining a circumferential slot 348 having a circumferentially directed opening 350 facing in a circumferential direction opposite to surface 344.

Adjacent first insertion guide element receiving protrusion 342 and spaced from opening 350 thereof by a circumferential distance 353 is a second insertion guide element receiving protrusion 352, defining a circumferential slot 358 having a circumferentially directed opening 360 facing in a circumferential direction opposite to opening 350.

Adjacent second end protrusion 320 and spaced from inclined surface 332 thereof by a relatively long second circumferential distance 361 is a third insertion guide element receiving protrusion 362, preferably having an inclined surface 364 facing inclined surface 332 of protrusion 320, and an outer circumferential surface 366 and defining a circumferential slot 368 having a circumferentially directed opening 370 facing in a circumferential direction opposite to surface 364.

Adjacent third insertion guide element receiving protrusion 362 and spaced from opening 370 thereof by a circumferential distance 371 is a fourth insertion guide element receiving protrusion 372, defining a circumferential slot 378 having a circumferentially directed opening 380 facing in a circumferential direction opposite to opening 370.

In the illustrated embodiment of Figs. 3A and 3B, the insertion guide element 306 is mounted into respective slots 348 and 358 of respective first and second insertion guide element receiving protrusions 342 and 352. The insertion guide element is preferably a generally curved upstanding element having a peripheral guide edge surface 381, including a generally upstanding portion 382, a first corner portion 383, an inclined portion 384, a generally circumferential portion 385, a second corner portion 386, a concave portion 387, a third corner portion 388 and a generally upstanding portion 389.

In the illustrated embodiment of Figs. 3A and 3B, the insertion guide element 308 is mounted into respective slots 368 and 378 of respective second and third insertion guide element receiving protrusions 362 and 372. The insertion guide element is preferably a generally curved upstanding element having a peripheral guide edge surface 391, including a generally upstanding portion 392, a first concave portion 393, a rounded top portion 394, a second concave portion 395, a first shoulder portion 396, a third concave portion 397, a second shoulder portion 398, and generally upstanding portion 399.

It is appreciated that in the embodiments of Figs. 3A - 3B, the insertion guide elements may be integrally formed with an end portion or mounted thereon in any other suitable manner.

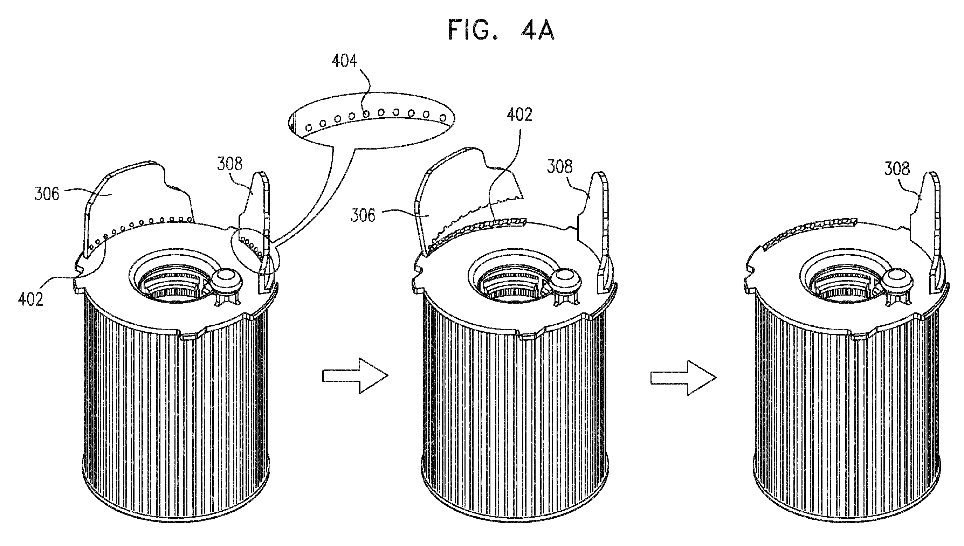

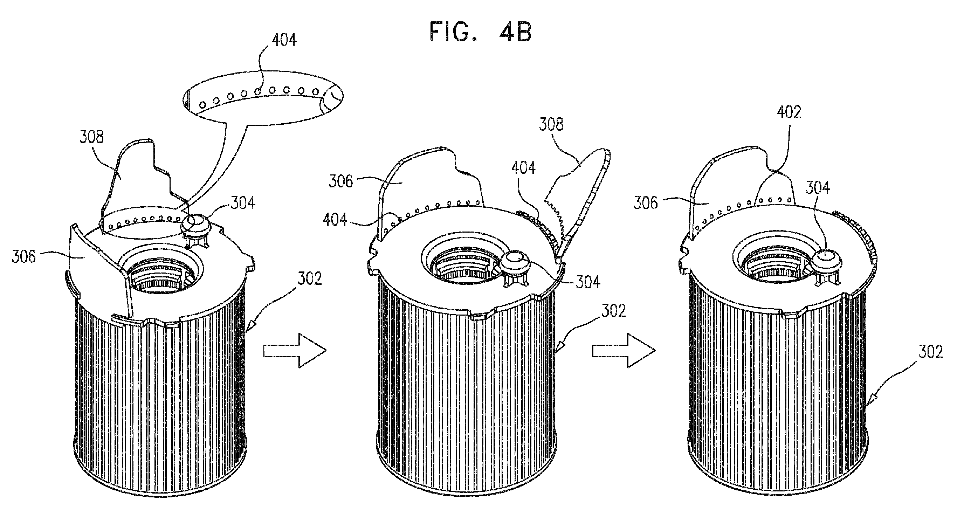

Fig. 4A shows removal of insertion guide element 306, as by tearing at a perforation 402 formed therein, thus leaving only insertion guide element 308 on filter body 302. Fig. 4B shows removal of insertion guide element 308, as by tearing at a perforation 404 formed therein, thus leaving only insertion guide element 306 on filter body 302.

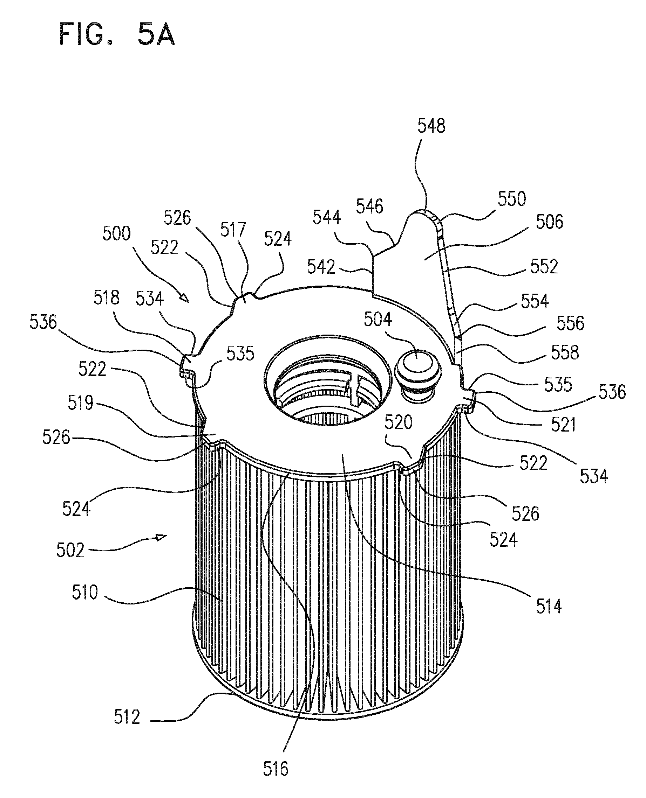

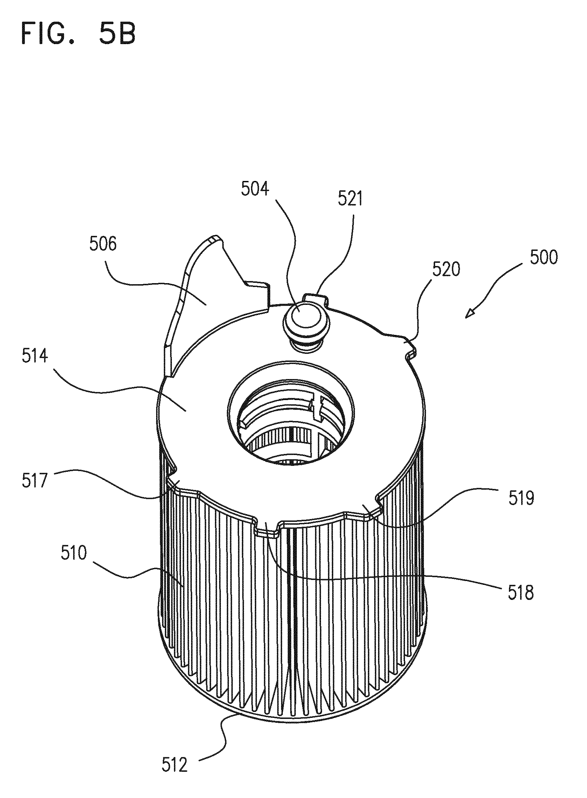

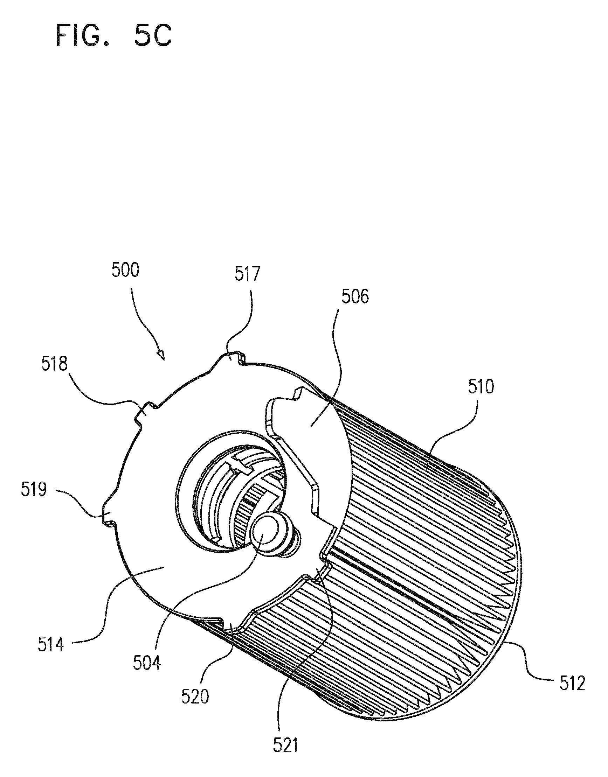

Reference is now made to Figs. 5A - 5C, which are simplified pictorial illustrations of a further embodiment of a filter element constructed and operative in accordance with a preferred embodiment of the present invention. As seen in Figs. 5A and 5B, there is provided a fluid filter 500 including a fluid filter body 502 and an aperture plug protrusion 504 mounted on the fluid filter body 502. In accordance with a preferred embodiment of the present invention there is additionally provided an insertion guide element 506, separate from the aperture plug protrusion 504, which is operative to guide the fluid filter body along an inner side surface of a filter housing (not shown) as it is inserted into the filter housing.

As seen in Figs. 5A - 5C, the fluid filter body 502 includes a conventional generally cylindrical filter element portion 510 and first and second generally flat end portions 512 and 514. Aperture plug protrusion 504 extends outwardly from end portion 514.

End portion 514 is preferably formed with a generally circular circumferential edge 516 including first, second, third, fourth and fifth mutually spaced edge protrusions 517, 518, 519, 520 and 521. First, third and fourth edge protrusions 517,519, and 520 each preferably includes a generally inclined edge portion 522, a generally radially extending edge portion 524 and a generally circumferential edge portion 526 extending therebetween. Second and fifth edge protrusions 518 and 521 each preferably include first and second generally radially extending edge portions 534 and 535 and a generally circumferential edge portion 536 extending therebetween.

Mounted along circumferential edge 516 between edge protrusions 521 and 517 and extending generally away from and perpendicularly to end portion 514 and preferably integrally formed therewith is insertion guide element 506. Insertion guide element 506 is preferably a generally curved upstanding element having a peripheral guide edge surface 535, including a generally upstanding portion 542, a first shoulder portion 544, a first concave portion 546, a first convex portion 548, a top corner portion 550, a generally inclined portion 552, a second concave portion 554, a second shoulder portion 556 and a generally upstanding portion 558.

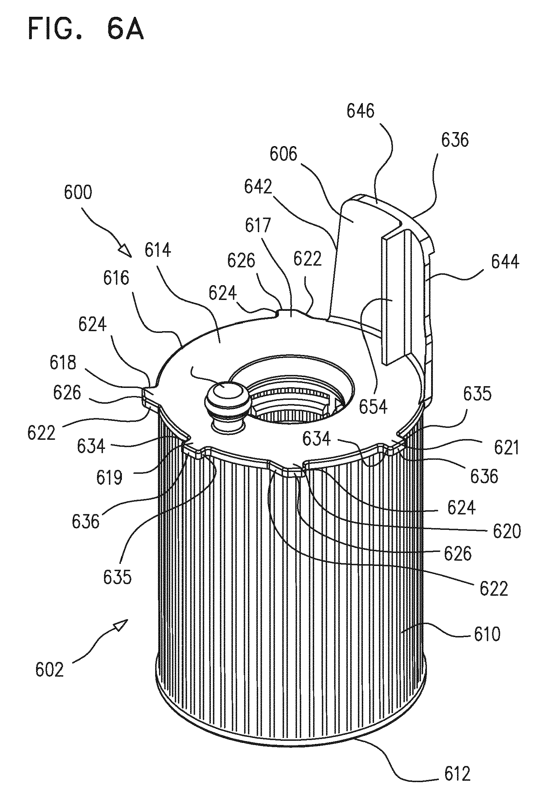

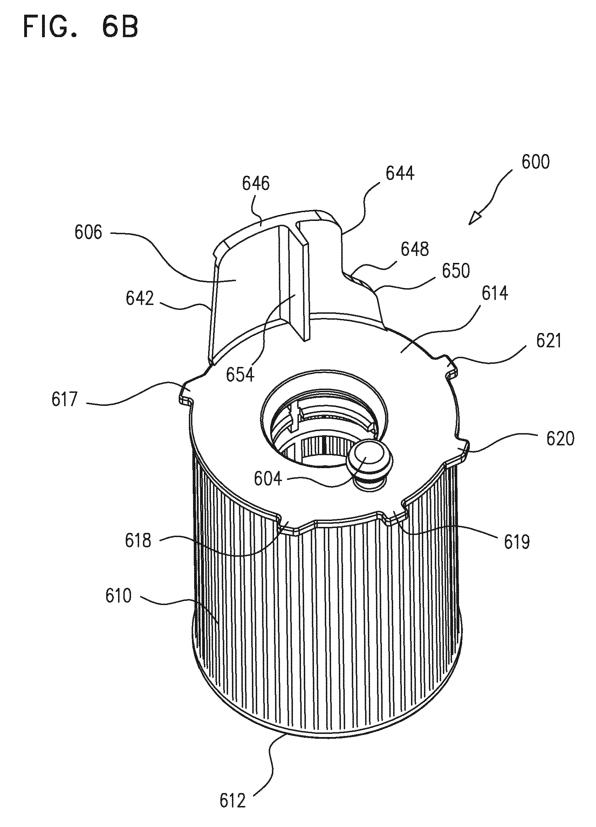

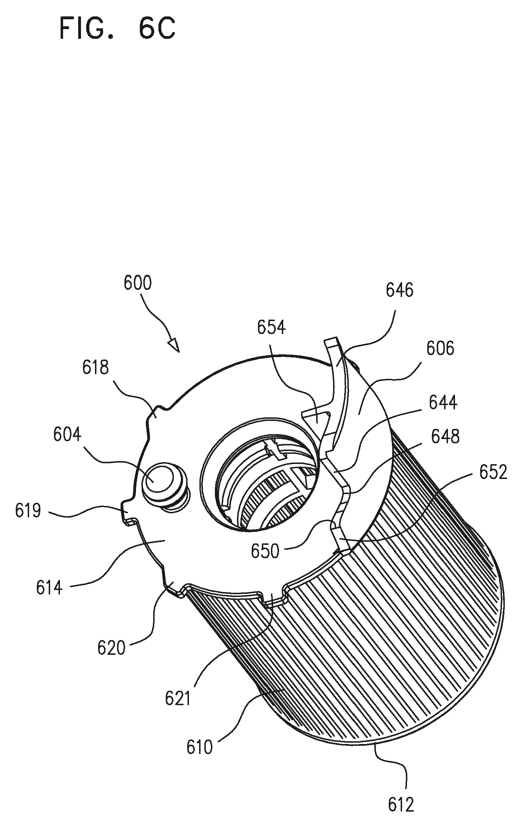

Reference is now made to Figs. 6A - 6C, which are simplified pictorial illustrations of a yet further embodiment of a filter element constructed and operative in accordance with a preferred embodiment of the present invention. As seen in Figs. 6A and 6B, there is provided a fluid filter 600 including a fluid filter body 602 and an aperture plug protrusion 604 mounted on the fluid filter body 602. In accordance with a preferred embodiment of the present invention there is additionally provided an insertion guide element 606, separate from the aperture plug protrusion 604, which is operative to guide the fluid filter body along an inner side surface of a filter housing (not shown) as it is inserted into the filter housing.

As seen in Figs. 6A - 6C, the fluid filter body 602 includes a conventional generally cylindrical filter element portion 610 and first and second generally flat end portions 612 and 614. Aperture plug protrusion 604 extends outwardly from end portion 614. End portion 614 is preferably formed with a generally circular circumferential edge 616 including first, second, third, fourth and fifth mutually spaced edge protrusions 617, 618, 619, 620 and 621. First, second and fourth edge protrusions 617, 619, and 620 each preferably includes a generally inclined edge portion 622, a generally radially extending edge portion 624 and a generally circumferential edge portion 626 extending therebetween. Third and fifth edge protrusions 618 and 621 each preferably include first and second generally radially extending edge portions 634 and 636 and a generally circumferential edge portion 636 extending therebetween.

Mounted along circumferential edge 616 between edge protrusions 621 and 617 and extending generally away from and perpendicularly to end portion 614 and preferably integrally formed therewith is insertion guide element 606. Insertion guide element 606 is preferably a generally curved upstanding element having a peripheral guide edge surface 636, including first and second generally upstanding portions 642 and 644 and a generally circumferentially, generally flat portion 646 extending therebetween, a concave portion 648, a shoulder portion 650 and a generally inclined portion 652. A generally radially inwardly directed supporting rib 654 supports insertion guide element 606.

## Claims

1. An adaptable fluid filter (300) comprising:
a fluid filter body (302); and
**characterized in that** said filter also comprises:
first and second selectably removable insertion guide elements (306, 308), which guide the fluid filter body along an inner side surface of a filter housing as it is inserted into the filter housing, a selectable one of said first and second selectably removable insertion guide elements being detachable from said filter body so as to adapt the fluid filter for insertion into a corresponding selectable fluid filter housing.

2. An adaptable fluid filter according to claim 1 and also comprising an aperture plug protrusion (304) mounted on the fluid filter body and wherein said first and second selectably removable insertion guide elements are separate from the aperture plug protrusion.

3. A fluid filter according to claim 1 or claim 2 and wherein said fluid filter body includes a generally flat end portion (314) formed with a generally circular circumferential edge (316) including at least one edge protrusion (318, 320).

4. A fluid filter according to claim 3 and wherein at least one of said at least one edge protrusion includes:
a generally inclined edge portion (322, 332);
a generally radially extending edge portion (324, 334); and
a generally circumferential edge portion (326, 336) extending between said generally inclined edge portion and said generally radially extending edge portion.

5. A fluid filter according to claim 3 and wherein said generally flat end portion includes at least two insertion guide element receiving protrusions (342, 352).

6. A fluid filter according to claim 5 and wherein each of said at least two insertion guide element receiving protrusions define a circumferential slot (348,358).

7. A fluid filter according to claim 6 and wherein each of said first and second selectably removable insertion guide elements is mounted in said circumferential slot defined by said at least two insertion guide element receiving protrusions.

## Patentansprüche

1. Anpassbarer Fluidfilter (300), umfassend:
einen Fluidfilterkörper (302); und
**dadurch gekennzeichnet, dass** der Filter außerdem Folgendes umfasst:
ein erstes und ein zweites selektiv abnehmbares Einsteck-Führungselement (306, 308), die den Fluidfilterkörper entlang einer inneren Seitenfläche eines Filtergehäuses führen, wenn er in das Filtergehäuse eingesteckt wird, wobei ein auswählbares des ersten und des zweiten selektiv abnehmbaren Einsteck-Führungselements von dem Filterkörper lösbar ist, um den Fluidfilter zum Einstecken in ein entsprechendes auswählbares Fluidfiltergehäuse anzupassen.

2. Anpassbarer Fluidfilter nach Anspruch 1, der außerdem einen an dem Fluidfilterkörper angebrachten Öffnungsstopfen-Vorsprung (304) umfasst und wobei das erste und das zweite selektiv abnehmbare Einsteck-Führungselement von dem Öffnungsstopfen-Vorsprung getrennt sind.

3. Fluidfilter nach Anspruch 1 oder Anspruch 2, wobei der Fluidfilterkörper einen allgemein ebenen Endabschnitt (314) umfasst, der mit einem allgemein kreisförmigen Umfangsrand (316) gebildet ist, der mindestens einen Randvorsprung (318, 320) umfasst.

4. Fluidfilter nach Anspruch 3, wobei mindestens einer des mindestens einen Randvorsprungs Folgendes umfasst:
einen allgemein schrägen Randabschnitt (322 332);
einen sich allgemein radial erstreckenden Randabschnitt (324, 334); und
einen allgemein in Umfangsrichtung verlaufenden Randabschnitt (326, 336), der sich zwischen dem allgemein schrägen Randabschnitt und dem sich allgemein radial erstreckenden Randabschnitt erstreckt.

5. Fluidfilter nach Anspruch 3, wobei der allgemein ebene Endabschnitt mindestens zwei Einsteck-Führungselement-Aufnahmevorsprünge (342, 352) umfasst.

6. Fluidfilter nach Anspruch 5, wobei die mindestens zwei Einsteck-Führungselement-Aufnahmevorsprünge jeweils einen in Umfangsrichtung verlaufenden Schlitz (348, 358) definieren.

7. Fluidfilter nach Anspruch 6, wobei das erste und das zweite selektiv abnehmbare Einsteck-Führungselement jeweils in dem von den mindestens zwei Einsteck-Führungselement-Aufnahmevorsprüngen definierten in Umfangsrichtung verlaufenden Schlitz angebracht sind.

## Revendications

1. Filtre de fluide adaptable (300) comprenant :
un corps de filtre de fluide (302) ; et
**caractérisé en ce que** ledit filtre comporte également :
des premier et deuxième éléments de guidage d'insertion sélectivement amovibles (306, 308), qui guident le corps du filtre de fluide le long d'une surface latérale interne d'un logement de filtre au fur et à mesure qu'il est inséré dans le logement de filtre, un élément sélectionnable desdits premier et deuxième éléments de guidage d'insertion sélectivement amovibles étant détachable dudit corps de filtre de sorte à adapter le filtre de fluide en vue d'une insertion dans un logement de filtre de fluide sélectionnable correspondant.

2. Filtre de fluide adaptable selon la revendication 1, et comprenant également une saillie à obturateur d'ouverture (304) montée sur le corps du filtre de fluide, et lesdits premier et deuxième éléments de guidage d'insertion sélectivement amovibles étant distincts de la saillie à obturateur d'ouverture.

3. Filtre de fluide selon la revendication 1 ou la revendication 2, et ledit corps de filtre de fluide incluant une portion d'extrémité plate de manière générale (314) formée avec un bord circonférentiel circulaire de manière générale (316) incluant au moins une saillie de bord (318, 320).

4. Filtre de fluide selon la revendication 3, et au moins une de ladite au moins une saillie de bord incluant :
une portion de bord inclinée de manière générale (322, 332) ;
une portion de bord s'étendant radialement de manière générale (324, 334) ; et
une portion de bord circonférentielle de manière générale (326, 336) s'étendant entre ladite portion de bord inclinée de manière générale et ladite portion de bord s'étendant radialement de manière générale.

5. Filtre de fluide selon la revendication 3, et ladite portion d'extrémité plate de manière générale incluant au moins deux saillies de réception d'éléments de guidage d'insertion (342, 352).

6. Filtre de fluide selon la revendication 5, et chacune desdites au moins deux saillies de réception d'éléments de guidage d'insertion définissant une fente circonférentielle (348, 358).

7. Filtre de fluide selon la revendication 6, et chacun desdits premier et deuxième éléments de guidage d'insertion sélectivement amovibles étant monté dans ladite fente circonférentielle définie par lesdites au moins deux saillies de réception d'éléments de guidage d'insertion.
